# EUROPEAN PATENT SPECIFICATION

(11) **EP 0 868 486 B1**
(45) Date of publication and mention of the grant of the patent: **24.11.2004**
(21) Application number: 96944415.7
(22) Date of filing: 20.12.1996
(51) Int. Cl.: C08L 67/00, C08L 77/00, C08K 13/04

(54) **POLYAMIDE OR POLYESTER COMPOSITIONS**
POLYAMID- ODER POLYESTERZUSAMMENSETZUNG
COMPOSITIONS DE POLYAMIDE OU POLYESTER

(30) Priority: 22.12.1995 US 577357; 13.08.1996 US 23395; 19.12.1996 US 770191
(43) Date of publication of application: 07.10.1998
(60) Divisional application: 03076674.5
(73) Proprietor: E.I. DU PONT DE NEMOURS AND COMPANY, Wilmington, Delaware 19898 (US)
(72) Inventor: MARTENS, Marvin, Michel, Vienna, WV 26105-3290 (US); KASOWSKI, Robert, Valentine, West Chester, PA 19382-7058 (US); COSSTICK, Kevin, Bodle, CH-1290 Versoix (CH); PENN, Robert, Earl, Wilmington, DE 19807-2947 (US)
(74) Representative: Abitz, Walter, Dr.-Ing.
(86) International application number: PCT/US1996/020041
(87) International publication number: WO 1997/023565

(56) References cited:
- EP-A- 0 001 322
- WO-A-96/09344
- PATENT ABSTRACTS OF JAPAN vol. 096, no. 010, 31 October 1996 & JP 08 165425 A (MITSUBISHI ENG PLAST KK)
- POLIMERY, vol. 35, no. 1/02, January 1990, pages 33-35, XP000646018 KICKO-WALCZAK E ET AL: "THE EFFECT OF SELECTED FIRE-RETARDANTS ON THE IGNITABILITY AND SMOKE GENERATION BY GLASS-POLYESTER LAMINATES USED IN THE RAILWAY STOCK"
- POLYMERY, vol. 37, no. 11/12, pages 527-9, XP000646017 KICCKO-WALCZAK: "new ecological polyester resins with reduced flammability" & INT POLYM SCI + TECHNOL, vol. 20, no. 3, 1993, pages t60-t63,

## Description

This invention relates to resin compositions which have a combination of good physical properties and good fire resistance.

### TECHNICAL BACKGROUND

Synthetic resins, including polyesters and aliphatic polyamides, such as nylon-6,6 and nylon-6, and copolymers thereof, are often used for molded articles and fibers. In many uses, particularly for molded articles, it is preferred if the resin has improved resistance to fire, compared to the resin alone. This is often attained by the addition of various agents which improve the basic fire resistance of the resin, but sometimes these agents degrade or diminish other physical properties of the resin. Since resins are widely used, compositions which have improved fire resistance but yet retain the desirable physical properties of the resin are constantly being sought.

German Patents 2,150,484 and 2,130,793, and A. E. Lipska, Comb. Inst. Arizona State Univ., West. State Sect. Combust, Inst. WSCI, 1973, report that certain tungsten compounds can be used in various ways to improve the fire resistance of polyamides. The combinations of agents described hereinafter are riot disclosed in these references.

U.S. Patent 4,298,518 discloses compositions containing polyamides and melamine cyanurate, which are said to have good fire resistance.

U.S. Patent 3,458,470 discloses compositions containing polyamides and a variety of tungsten or molybdenum compounds. including silico- and phosphotungstic acids. These compositions are said to have good resistance to discoloration and be stable to light.

Melamine phosphate may be added to synthetic resins to improve the flame retardancy of the resins, but when heated to normal engineering polymer processing temperatures the melamine phosphate gives off so much water that the resultant mixture of the resin and the melamine phosphate has very poor physical properties.

What are needed, therefore, are flame retardant resin compositions which do not have the problems and deficiencies of the prior art.

### SUMMARY OF THE INVENTION

This invention relates to flame retardants for polyester compositions, and specifically relates to compositions containing (1) 30 to 70 weight percent of a polyester as defined hereinafter; (2) 15 to 40 weight percent of a reinforcing agent, e.g. glass or mineral reinforcing agent; and (3) a flame retardant of (a) 20 to 30 weight percent of melamine phosphate and up to 10 weight percent of a charring catalyst; (b) 15 to 30 weight percent of melamine phosphate, up to 10 weight percent of a charring catalyst and up to 10 weight percent of a char former; (c) 15 to 30 weight percent of melamine pyrophosphate and up to 10 weight percent of a charring catalyst; (d) 15 to 30 weight percent of melamine pyrophosphate, up to 10 weight percent of a charring catalyst and up to 10 weight percent of a char former; or (e) 20 to 30 weight percent melamine pyrophosphate and up to 10 weight percent of at least one of melamine cyanurate, melamine, or zinc borate; wherein all percents by weight are based on the total weight of (1)+(2)+(3) only.

Another embodiment of the present invention is set forth hereinafter in claim 2.

These compositions exhibit good fire resistance and are useful as molding resins. These compositions may also include other additional fillers and additives as are commonly known in the art.

### DETAILED DESCRIPTION

The composition described herein is a resin composition having both good physical properties and good flame retardancy. The composition has three components (1) a polyester; (2) a reinforcing agent, e.g. glass or mineral reinforcing agent; and (3) a flame retardant which includes a melamine phosphate compound and optionally a chairing catalyst, a charring catalyst and a char former, melamine cyanurate, melamine or zinc borate.

The first component is a polyester which is present in an amount of 30 to 70 weight percent of the composition.

"Polyester" as used herein includes polymers having an inherent viscosity of 0.3 or greater and which are, in general, linear saturated condensation products of glycols and dicarboxylic acids, or reactive derivatives thereof. They comprise condensation products of aromatic dicarboxylic acids having 8 to 14 carbon atoms and at least one glycol selected from the group consisting of neopentyl glycol, cyclohexane dimethanol and aliphatic glycols of the formula HO(CH₂)ₙOH where n is an integer of 2 to 10. Up to 50 mole percent of the aromatic dicarboxylic acids may be replaced by at least one different aromatic dicarboxylic acid having from 8 to 14 carbon atoms, and/or up to 20 mole percent may be replaced by an aliphatic dicarboxylic acid having from 2 to 12 carbon atoms.

The most common polyester compositions are based on polyethylene terephthalate homopolymers, polybutylene terephthalate homopolymers, polyethylene terephthalate /polybutylene terephthalate copolymers, polyethylene terephthalate/polybutylene terephthalate mixtures and mixtures thereof, although other polyester may be used as well, alone, in combination with each other, or in combination with those polyesters listed above.

The second component in the invention is a reinforcing agent, such as a glass or mineral reinforcing agent, and which may include glass, carbon, mica and/or aramid fibers. The reinforcing agent, which is present in an amount of 15 to 40 weight percent, is important in obtaining the desired combination of both good physical properties and improved fire resistance in the inventive composition.

The third component of the invention is a flame retardant that includes a melamine phosphate compound and optionally either a charring catalyst or a charring catalyst and a char former as set forth above. In one embodiment, the melamine phosphate compound is doped with a charring catalyst, or with a charring catalyst and a char former.

The melamine phosphate compound may be melamine phosphate or melamine pyrophosphate or mixture of melamine phosphate and melamine pyrophosphate.

The flame retardant component typically contains 5 to 45 weight percent of the melamine phosphate compound, based on the total weight of the inventive composition. When less than 15 weight percent of the melamine phosphate compound is present, the composition is not effective as a flame retardant under UL94. However, lower amounts of the flame retardant may be effective under a flame retardant test less stringent that UL94, such as the glow wire test of International Standard IEC 695-2-1/0 1994. While it may be possible to use greater that 30 weight percent of a melamine phosphate compound, such amounts are not deemed to be practical because of the high costs of using such an amount of the melamine phosphate compound. However, even greater amounts of the melamine phosphate may be used.

An optional ingredient of the inventive composition that is part of the flame retardant is a charring catalyst. When melamine pyrophosphate is used as the melamine compound, the presence of the charring catalyst is not essential to the invention, but its use in conjunction with melamine pyrophosphate greatly reduces the amount of melamine pyrophosphate needed, as discussed below.

As used herein, the term "charring catalyst" includes metal salt of a tungstic acid or a complex oxide acid of tungsten and a metalloid, a tin oxide salt such as sodium tin oxide, and/or ammonium sulfamate. Preferred metal salts include alkali metal salts of a tungstic acid, with sodium tungstate being especially preferred: By a complex oxide acid of tungsten and a metalloid is meant a complex oxide acid formed by a metalloid such as phosphorous or silicon and tungsten. Preferred complex oxide acids include silicotungstic acid and phosphotungstic acid, with silicotungstic acid being especially preferred. If the charring catalyst is present as part of the flame retardant component of the inventive composition it is present in an amount up to 10 weight percent based on the total weight of the inventive composition. A preferred range is from 0.1 to 10 weight percent, with a more preferred range being from 0.1 to 2 weight percent.

Another optional ingredient of the inventive composition that is part of the flame retardant is a char former such as a polyhydric alcohol. Other examples include novolac, vinyl alcohols and starches. In the present invention, it is preferred that the polyhydric alcohol be pentaerythritol or dipentaerythritol. If it is present in the composition, the char former is present in amounts of up to 10 weight percent based on the total weight of the inventive composition. A preferred range is from 0.1 to 10 weight percent, with a more preferred range being from 0.1 to 2 weight percent.

Still other optional ingredients of the inventive composition that are part of the flame retardant are melamine cyanurate, melamine, and zinc borate.

The compositions described above have excellent flame retardant characteristics. However, the compositions do not always have acceptable electrical properties. An important measure of the electrical properties of a resin composition is the Comparative Tracking Index (CTI). Tracking is defined as the formation of electrically conductive paths on the surface of an insulator between two electrodes caused either through pollution or degradation of the insulator. Tracking resistance is the ability of an insulator to prevent such currents.

CTI is measured by ASTM UL 746A which is a test method that indicates the relative resistance of solid electrical insulating materials to tracking for voltages up to 600 V when the surface is exposed under electric stress to water with the addition of contaminants. The test is made on a resin specimen that is 15 x 15 mm, with a thickness of ≥ 3mm, which has voltage applied across electrodes using solution A (ammonium chloride) as a contaminant. Tracking is considered to have occurred during the test procedure if a current of 0.5 A circulates for more than 2 seconds actuating an overcurrent relay. Failure also occurs if, while there is no. current and the relay was not operated, the specimen is burning. CTI is the defined as the voltage at which no tracking occurs after 50 drops of solution A, provided that at 25 V lower no tracking occurs after 100 drops of solution A.

Resin compositions that do not have good electrical properties typically have a CTI of about 300 V or lower. The resin compositions of the present invention unexpectedly have a CTI of 350 V to 600V.

The flame retardant component of the present invention includes the following combinations of a melamine phosphate compound with either a charring catalyst, a charring catalyst and a char former, melamine cyanurate, melamine or zinc borate: (a) 20 to 30 weight percent of melamine phosphate and up to 10 weight percent of a charring catalyst; (b) 15 to 30 weight percent of melamine phosphate, up to 10 weight percent of a charring catalyst and up to 10 weight percent of a char former; (c) 5 to 45 weight percent of melamine pyrophosphate; preferably 25 to 45 weight percent for UL-94 V0 ratings; (d) 15 to 30 weight percent of melamine pyrophosphate and up to 10 weight percent of a charring catalyst; (e) 15 to 30 weight percent of melamine pyrophosphate, up to 10 weight percent of a charring catalyst and up to 10 weight percent of a char former; or (f) 20 to 30 weight percent melamine pyrophosphate and up to 10 weight percent of at least one of melamine cyanurate, melamine, or zinc borate.

By "melamine compound doped with a charring catalyst" is meant a melamine phosphate compound such as melamine pyrophosphate that is made such that the charring catalyst is bound to the melamine pyrophosphate. The melamine compound doped with a charring catalyst may be made by preparing an aqueous solution of melamine, preparing an aqueous solution of silicotungstic acid or phosphotungstic acid, and preparing an aqueous solution of a phosphorus compound, such as H₃PO₄ (85% acid). The tungstic acid solution is added to the phosphorus solution, and then that mixture is added to the melamine solution, wherein melamine phosphate is converted to melamine pyrophosphate through the loss of a water molecule. The resulting solution is vacuum dried to produce the doped melamine phosphate compound. The mole ratio of the melamine to phosphorus in the solution should be from 2:1 to 1:2. The number of moles of the charring catalyst should be from 0.01 to 0.5 moles per mole of melamine phosphate compound, and preferably 0.1 moles per mole of melamine compound. There may not be a 100% conversion of melamine phosphate to melamine pyrophosphate when the doped melamine compound is made, so that while the doped melamine compound is primarily melamine pyrophosphate, it may also include unconverted melamine phosphate.

The melamine compound that is doped with a charring catalyst may also be made by contacting, in an aqueous medium, melamine and silicotungstic acid or phosphotungstic acid in a molar ratio of from 1 to 24 moles of melamine per mole of the tungsten compound to prepare "melamine salts" of the tungstic acids. It is preferred that the contacting be carried out at 50°C to 100°C. It is believed that the melamine not only forms salts with the tungsten compound used, but also solvates the resulting salt much like water forms hydrates. Cyanuric acid may also be present so that the melamine forms a "mixed salt" with cyanuric acid and the silico- or phosphotungstic acid.

It has also been discovered that for compositions that include a synthetic, aliphatic polyamide and a glass or mineral reinforcing agent, melamine pyrophosphate alone is effective as a flame retardant to obtain UL-94 V0 if used in a proportion of 25 to 30 weight percent. As discussed above, an amount of melamine pyrophosphate of 5 weight percent or above may be effective to pass a less stringent flame retardant test such as the glow wire test.

It has also been discovered that for compositions that include a polyester and a glass or mineral reinforcing agent, melamine pyrophosphate alone is effective as a flame retardant under UL-94 if used in a proportion of 25 to 45 weight percent. As discussed above, an amount of melamine pyrophosphate of 5 weight percent or above may be effective to pass a less stringent flame retardant test such as the glow wire test.

The compositions described herein have improved fire resistance compared to the resin alone, and are particularly useful as molding resins for making parts such as electrical and electronic parts such as bobbins, coil forms, connectors, fasteners, and for parts in equipment such as circuit breakers. These compositions also retain the good physical properties of the resins, that is desirable mechanical properties particularly toughness. Toughness may be roughly estimated as being proportional to the product of the tensile strength and elongation, so the higher either or both of these are, the tougher the polymer. It is preferred that the composition be fire resistant enough so that it has a rating of V0 in the Underwriters Laboratory test UL-94, at a thickness of 0.16 cm (1/16 inch).

It is well known that lower levels of the flame retardants disclosed herein may be successfully, used to prepare compositions which meet flame retardant tests less demanding than Underwriters Laboratory test UL-94. For example, lower amounts of the flame retardants may be used in combination with a resin and a reinforcing agent and still pass the glow wire test under less demanding conditions, specifically at temperatures lower than 960C and/or at higher thicknesses than 1.5 mm. The glow wire test is International Standard IEC 695-2-1/0 1994.

It is also preferred that the melamine phosphate compound, reinforcing agent and flame retardant, such as the charring catalyst, be relatively well dispersed in the resin. A preferred degree of dispersion can be attained by producing the composition in any of a number of different types of equipment which are commonly used to disperse materials in polymers. For instance, a twin screw extruder with appropriate mixing screw sections can be used to satisfactorily melt mix the ingredients. It is also believed that the dispersion of the charring catalyst in the polymer is aided by starting with tungsten compound having relatively small particle sizes.

It has also been discovered that the elongation of molded bars made from the inventive composition may be unexpectedly increased by adding to the composition a compatabilizer such as a silane compound. An example of an acceptable silane compound is triethoxy(3-aminopmply) silane sold under the trade name A1100 by Aldrich Chemical Company of Milwaukee, Wisconsin. The silane compound may be added to the composition by any conventional method. A preferred method is that the silane is first coated onto the melamine phosphate compound before the melamine phosphate compound is added to the other components of the inventive composition. Alternatively, the silane may be added to the resin and/or reinforcing agent, which is then mixed with the melamine phosphate compound.

The silane compound may be present in any amount up to 0.4 weight percent, based on the total weight of the resin, reinforcing agent, flame retardant and silane compound only. A preferred range is from 0.01 to 0.4 weight percent, and a more preferred range is from 0.1 to 0.3 weight percent.

In a preferred embodiment, a flow enhancer may be added to the composition to improve the flow. An example of an acceptable flow enhancer is dodecanedioic acid (DDDA), available from E.I. du Pont de Nemours and Company of Wilmington, Delaware. When a flow enhancer is used with the compositions of the invention, it is preferred that the flow enhancer be used in an amount of from 0.25 to 0.5 weight percent, based only on the total weight percent of the resin, reinforcing agent, flame retardant and, if present, silane compound.

### EXAMPLES

The following abbreviations are used in the Examples and the Tables set out below:
RM - reinforcing material
MPC - melamine phosphate compound
CC - charring catalyst
CF - char former
MP - melamine phosphate
MPP - melamine pyrophosphate
PTA - phosphotungstic acid
STA - silicotungstic acid
NYADG - wollastonite
NATO - sodium tin oxide
MC - melamine cyanurate
M - melamine
ZB - zinc borate
PBT - polybutylene terephthalate
PET - polyethylene terephthalate
TS - tensile strength
EL - elongation
EBS - Acrawax C

Unless otherwise indicated, the following procedure was used in the examples. The resin used in the Example was ground, and then the resin, a reinforcing material, a melamine phosphate compound, a charring catalyst, a charring catalyst and a char former, melamine cyanurate, melamine, or zinc borate were thoroughly mixed, which usually took about 30 minutes. In the examples where a doped melamine compound was used, the doped melamine compound was prepared as set forth in the Example, and then was thoroughly mixed with the resin and reinforcing material.

The resin mixture was then dried under standard conditions, and then extruded on either a 28 mm or a 30 mm Werner & Pfleiderer twin screw extruder, using a screw design having a mid range screw severity, at a melt temperature of 270-300°C, and at rates of 11.3-15.9 kg per hour. Bars of 1/16" were molded on a 0.043 kg (1.5 oz) molding machine. Standard molding conditions for the resin mixtures were used.

These resin mixtures were then molded into bars using typical injection molding machines, ranging from laboratory sized machines to commercial sized machines. Melt temperatures were typically about 280-300°C, and mold temperatures were typically 45-100°C. The molded bars were then tested for a flammability rating in the UL-94 test at 0.16 cm thickness, unless otherwise indicated.

### EXAMPLES - POLYESTER RESIN

Rynite® 3934 polyester sold by DuPont of Wilmington, Delaware or Crystar® 3935 polyester sold by Shell of Houston; Texas, was used as the resin. These results are summarized in Tables 1 and 2.

### COMPARATIVE EXAMPLE 1

A molded bar was made using Rynite® 3934 polyester resin and melamine phosphate but no charring catalyst. The composition failed UL94.

### EXAMPLES 2 to 7

In these Examples, molded bars were made as in Example 1 except that silicotungstic acid was used as a charring catalyst. Examples 2 and 4 were V0. Example 3 was almost V0, but was a V2 because of the low amount of melamine phosphate relative to the charring catalyst. Example 5 failed because of a low amount of melamine phosphate relative to the charring catalyst. Examples 6 and 7 were V0.

### EXAMPLES 8-9 and COMPARATIVE EXAMPLE 10

Molded bars were made as in Example 1, except that silicotungstic acid and a char former of dipentaerythritol were compounded with the resin. The molded bars for Examples 8 and 9 were V0. Comparative Example 10 failed because of the insufficient amount of meiamine phosphate present.

### EXAMPLES 11-12

Molded bars were made as in Example 1, except that the melamine phosphate compound was melamine pyrophosphate. The compositions were V0.

### EXAMPLE 13

Molded bars were made as in Example 11, except that a charring catalyst was added to the composition. The composition was V0.

### EXAMPLE 14

A molded bar was made as in Example 1, except that the melamine phosphate compound was doped with the charring catalyst by making a solution of 98 g. of melamine in 700 g water and a solution of 16 g of silicotungstic acid in 20 g. water which was added into 84 g. H₃PO₄ (85% acid) in 300g water. The two solutions were mixed together and then vacuum dried at 90°C. The composition was V0.

### EXAMPLE 15

A molded bar was made as in Example 1, except that the melamine phosphate compound was doped with the charring catalyst by making a solution of 98 g. of melamine in 700 g water and a solution of 16 g of phosphotungstic acid in 20 g. water which was added into 84 g. H₃PO₄ (85% acid) in 300g water. The two solutions were mixed together and then vacuum dried at 90°C. The composition was V0.

### EXAMPLES 16-17

Molded bars were made as in Example 1, except that Crystar® 3935 polyester resin was used and the melamine phosphate compound was doped with the charring catalyst made by making a solution of 98 g of melamine in 700 g water and a solution of 16 g of phosphotungstic acid in 20 g water which was added into 84 g H₃PO₄ (85% acid) in 300 g water. The two solutions were mixed together and then vacuum dried at 90°C. The compositions were V0.

### EXAMPLES 18-19

Molded bars were made as in Example 16 except that the melamine phosphate compound was doped with the charring catalyst made by making a solution of 98 g of melamine phosphate in 700 g water and a solution of 1 g of silicotungstic acid in 20 g water. The two solutions were mixed together and then vacuum dried at 90°C. The compositions were V0.

### EXAMPLES 20-21 AND COMPARATIVE EXAMPLE 22

Molded bars were made as in the previous Example, except that Rynite® 3934 polyester resin was used. The compositions were V0. Example 22 included 15 wt% of the doped melamine phosphate compound, and failed the UL test.

### EXAMPLES - POLYBUTYLENE TEREPHTHALATE

In the following Examples, molded bars were made as in the previous Examples except that the resin used was polybutylene terephthaiate or mixtures of polybutylene terephthalate and polyethylene terephthalate. The polybutylene terephthalate used was Valox 307 available from General Electric, and the polyethylene terephthalate used was Crystar 3934 available from the DuPont Company. The data from these Examples are summarized in Table 3.

### EXAMPLES 23-33

In these Examples, molded bars wete made using PBT or PBT and PET with varying amounts of glass fiber reinforcing material and melamine pyrophosphate. All of the molded bars at 3.2 mm were V0. All the compositions were V0 at 1.6 mm, except for the composition made in Example 25 which was V1.

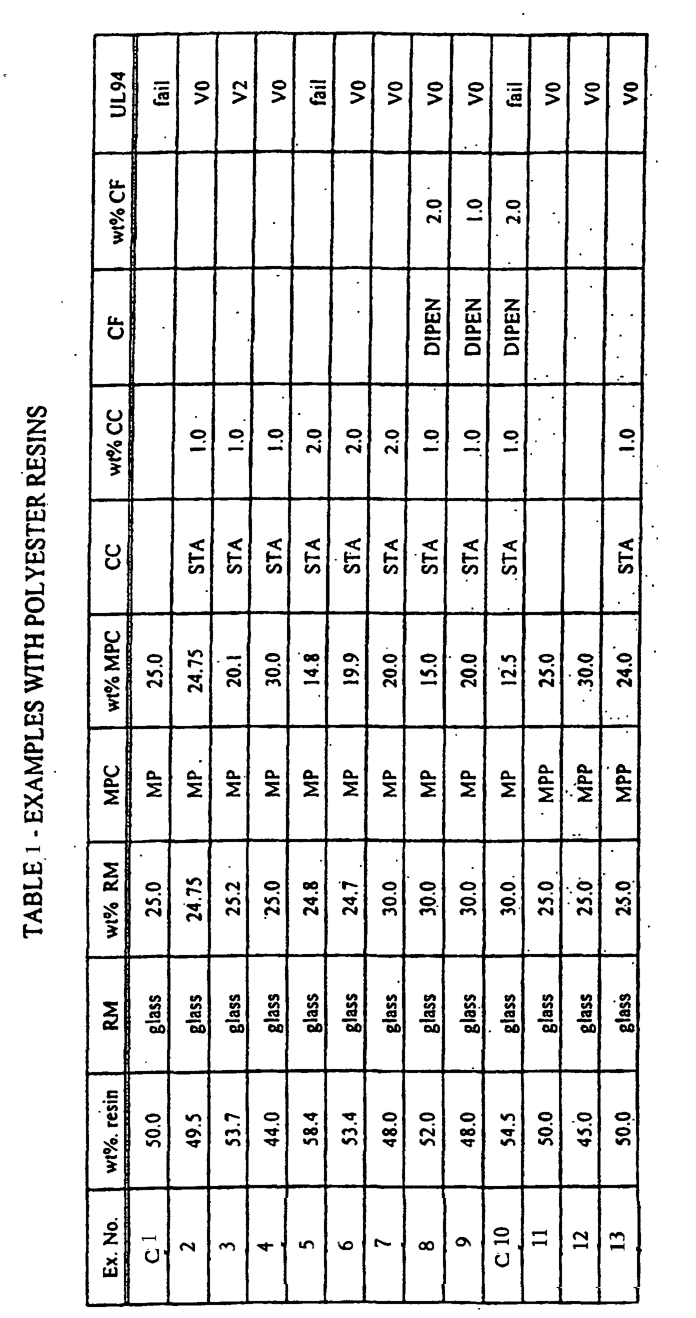

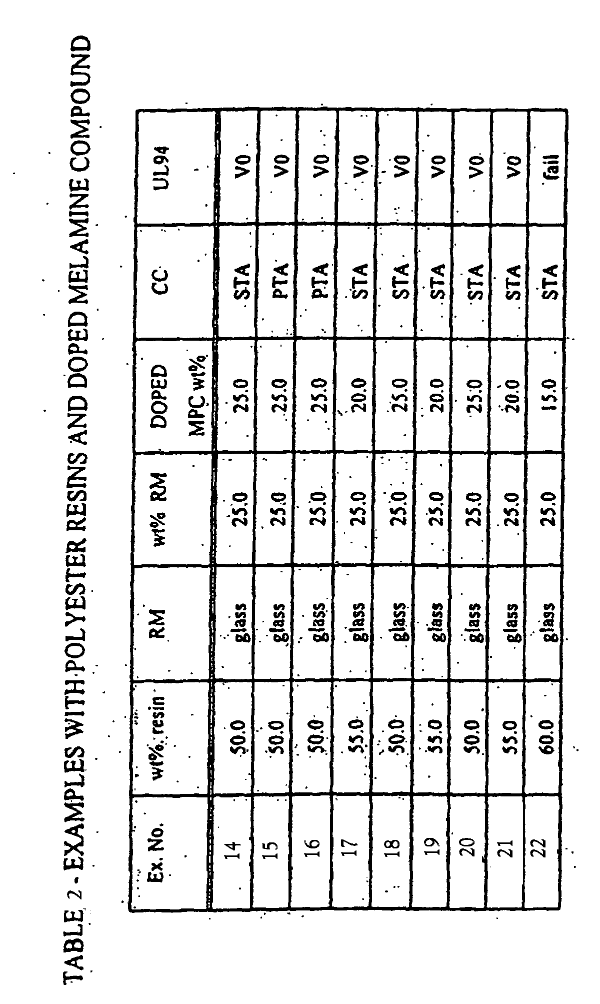

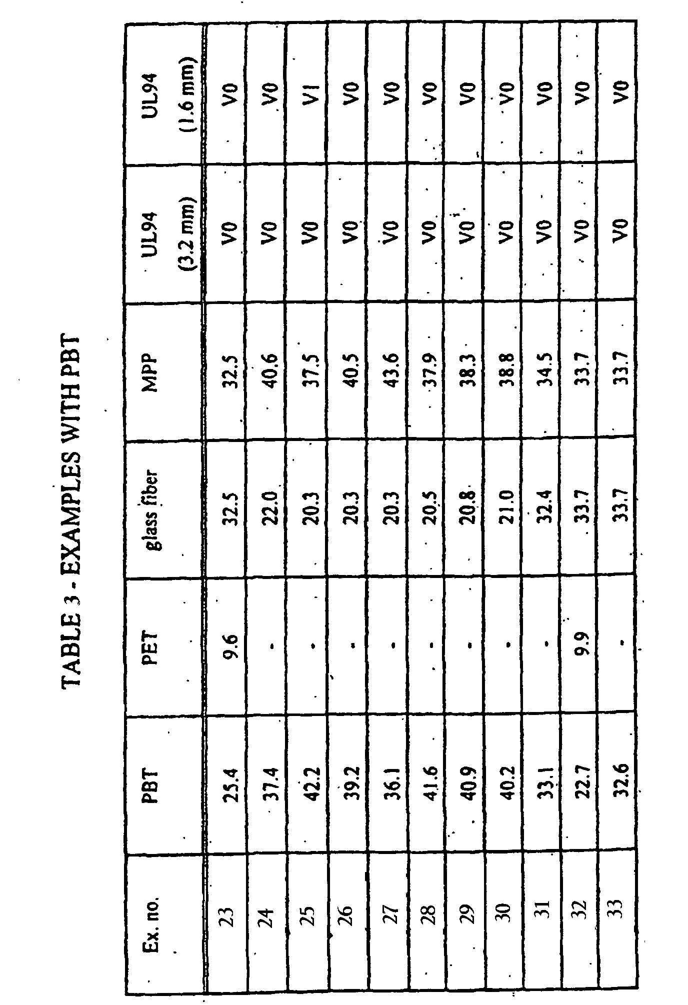

Although particular embodiments of the present invention have been described in the foregoing description, it will be understood by those skilled in the art that the invention is capable of numerous modifications, substitutions and rearrangements without departing from the spirit or essential attributes of the invention. Reference should be made to the appended claims, rather than to the foregoing specification, as indicating the scope of the invention.

In addition to the components discussed above, the compositions of this invention may contain additives commonly employed with synthetic resins, such as colorants, mold release agents, antioxidants, tougheners, nucleating agents, ultraviolet light and heat stabilizers and the like. An example of a common filler is magnesium hydroxide.

## Claims

1. A composition comprising:
(1) 30 to 70 weight percent of a polyester which is a condensation product of an aromatic dicarboxylic acid having 8 to 14 carbon atoms and at least one glycol selected from the group consisting of neopentyl glycol, cyclohexane dimethanol and aliphatic glycols of the formula HO(CH₂)ₙOH where n is an integer of 2 to 10, and wherein up to 50 mole percent of the aromatic dicarboxylic acid may be replaced by at least one different aromatic dicarboxylic acid having from 8 to 14 carbon atoms, and/or up to 20 mole percent of the aromatic dicarboxylic acid may be replaced by an aliphatic dicarboxylic acid having from 2 to 12 carbon atoms;
(2) 15 to 40 weight percent of a reinforcing agent; and
(3) a flame retardant selected from the group consisting of
(a) 20 to 30 weight percent of melamine phosphate and up to 10 weight percent of a charring catalyst;
(b) 15 to 30 weight percent of melamine phosphate, up to 10 weight percent of a charring catalyst and up to 10 weight percent of a char former;
(c) 15 to 30 weight percent of melamine pyrophosphate and up to 10 weight percent of a charring catalyst;
(d) 15 to 30 weight percent of melamine pyrophosphate, up to 10 weight percent of a charring catalyst and up to 10 weight percent of a char former; and
(e) 20 to 30 weight percent melamine pyrophosphate and up to 10 weight percent of at least one of melamine cyanurate, melamine, or zinc borate;
wherein all percents by weight are based on the total weight of (1)+(2)+(3) only.

2. A composition comprising:
(1) 30 to 70 weight percent of a polyester which is a condensation product of an aromatic dicarboxylic acid having 8 to 14 carbon atoms and at least one glycol selected from the group consisting of neopentyl glycol, cyclohexane dimethanol and aliphatic glycols of the formula HO(CH₂)ₙOH where n is an integer of 2 to 10, and wherein up to 50 mole percent of the aromatic dicarboxylic acid may be replaced by at least one different aromatic dicarboxylic acid having from 8 to 14 carbon atoms, and/or up to 20 mole percent of the aromatic dicarboxylic acid may be replaced by an aliphatic dicarboxylic acid having from 2 to 12 carbon atoms;
(2) 15 to 40 weight percent of a reinforcing agent; and
(3) a flame retardant of 5 to 45 weight percent of melamine pyrophosphate;
wherein all percents by weight are based on the total weight of (1)+(2)+(3) only.

3. The composition of Claim 1 wherein the charring catalyst is phosphotungstic acid or silicotungstic acid.

4. The composition of Claim 1 wherein the charring catalyst is an alkali metal salt of tungstic acid.

5. The composition of Claim 1 wherein the amount of the charring catalyst is 0.1 to 10 weight percent.

6. The composition of Claim 1 wherein the amount of the charring catalyst is 0.1 to 2 weight percent.

7. The composition of Claim 1 wherein the char former is a polyhydric alcohol.

8. The composition of Claim 7 wherein the polyhydric alcohol is pentaerythritol.

9. The composition of Claim 1 wherein the amount of the char former is 0.1 to 10 weight percent.

10. The composition of Claim 1 wherein the amount of the char former is 0.1 to 2 weight percent.

11. The composition of Claim 1 or Claim 2, wherein said polyester is polyethylene terephthalate, polybutylene terephthalate, polyethylene terephthalate/polybutylene terephthalate copolymers or polyethylene terephthalate/polybutylene terephthalate mixtures.

12. The composition of Claim 2 wherein the melamine pyrophosphate is present in an amount of 25 to 45 weight percent.

13. The composition of Claim 1 or Claim 2, wherein said reinforcing agent is glass, carbon, mica, aramid fibers or mixtures thereof.

14. The composition of Claim 1 or Claim 2, further comprising (4) a silane compound.

15. The composition of Claim 14, wherein the silane compound is present in an amount up to 0.4 weight percent, based on the total weight of (1)+(2)+(3)+(4) only.

16. The composition of any of Claims 1 to 15 which has a UL-94 rating of V0 at 0.16 cm thickness.

17. A molded article made from the composition of any one of Claims 1 to 16.

## Patentansprüche

1. Zusammensetzung, die aufweist:
(1) 30 bis 70 Gew.-% eines Polyesters, der ein Kondensationsprodukt einer aromatischen Dicarbonsäure mit 8 bis 14 Kohlenstoffatomen und mindestens eines Glycols ist, das aus der Gruppe ausgewählt ist, die aus Neopentylglycol, Cyclohexandimethanol und aliphatischen Glycolen mit der Formel HO(CH₂)ₙOH besteht, wobei n eine ganze Zahl von 2 bis 10 ist, und wobei bis zu 50 Mol-% der aromatischen Dicarbonsäure durch mindestens eine andere aromatische Dicarbonsäure mit 8 bis 14 Kohlenstoffatomen ausgetauscht werden können und/oder bis zu 20 Mol-% der aromatischen Dicarbonsäure durch eine aliphatische Dicarbonsäure mit 2 bis 12 Kohlenstoffatomen ausgetauscht werden können;
(2) 15 bis 40 Gew.-% eines Verstärkungsmittels; und
(3) ein Flammschutzmittel, ausgewählt aus der Gruppe, die aus
(a) 20 bis 30 Gew.-% Melaminphosphat und bis zu 10 Gew.-% eines Verkohlungskatalysators;
(b) 15 bis 30 Gew.-% Melaminphosphat, bis zu 10 Gew.-% eines Verkohlungskatalysators und bis zu 10 Gew.-% eines Kohlebildners;
(c) 15 bis 30 Gew.-% Melaminpyrophosphat und bis zu 10 Gew.-% eines Verkohlungskondensators;
(d) 15 bis 30 Gew.-% Melaminpyrophosphat, bis zu 10 Gew.-% eines Verkohlungskatalysators und bis zu 10 Gew.-% eines Kohlebildners;
und
(e) 20 bis 30 Gew.-% Melaminpyrophosphat und bis zu 10 Gew.-% mindestens einer der Verbindungen Melamincyanurat, Melamin oder Zinkborat
besteht; wobei alle Angaben in Gew.-% nur auf das Gesamtgewicht von (1) + (2) + (3) bezogen sind.

2. Zusammensetzung, die aufweist:
(1) 30 bis 70 Gew.-% eines Polyesters, der ein Kondensationsprodukt einer aromatischen Dicarbonsäure mit 8 bis 14 Kohlenstoffatomen und mindestens eines Glycols ist, das aus der Gruppe ausgewählt ist, die aus Neopentylglycol, Cyclohexandimethanol und aliphatischen Glycolen mit der Formel HO(CH₂)ₙOH besteht, wobei n eine ganze Zahl von 2 bis 10 ist, und wobei bis zu 50 Mol-% der aromatischen Dicarbonsäure durch mindestens eine andere aromatische Dicarbonsäure mit 8 bis 14 Kohlenstoffatomen ausgetauscht werden können und/oder bis zu 20 Mol-% der aromatischen Dicarbonsäure durch eine aliphatische Dicarbonsäure mit 2 bis 12 Kohlenstoffatomen ausgetauscht werden können;
(2) 15 bis 40 Gew.-% eines Verstärkungsmittels; und
(3) ein Flammschutzmittel mit 5 bis 45 Gew.-% Melaminpyrophosphat;
wobei alle Angaben in Gew.-% nur auf das Gesamtgewicht von (1) + (2) + (3) bezogen sind.

3. Zusammensetzung nach Anspruch 1, wobei der Verkohlungskatalysator Phosphorwolframsäure oder Kieselwolframsäure ist.

4. Zusammensetzung nach Anspruch 1, wobei der Verkohlungskatalysator ein Alkalimetallsalz der Wolframsäure ist.

5. Zusammensetzung nach Anspruch 1, wobei der Anteil des Verkohlungskatalysators 0,1 bis 10 Gew.-% beträgt.

6. Zusammensetzung nach Anspruch 1, wobei der Anteil des Verkohlungskatalysators 0,1 bis 2 Gew.-% beträgt.

7. Zusammensetzung nach Anspruch 1, wobei der Kohlebildner ein mehrwertiger Alkohol ist.

8. Zusammensetzung nach Anspruch 7, wobei der mehrwertige Alkohol Pentaerythritol ist.

9. Zusammensetzung nach Anspruch 1, wobei der Anteil des Kohlebildners 0,1 bis 10 Gew.-% beträgt.

10. Zusammensetzung nach Anspruch 1, wobei der Anteil des Kohlebildners 0,1 bis 2 Gew.-% beträgt.

11. Zusammensetzung nach Anspruch 1 oder Anspruch 2, wobei der Polyester aus Polyethylenterephthalat, Polybutylenterephthalat, Polyethylenterephthalat/Polybutylenterephthalat-Copolymeren oder Polyethylenterephthalat/Polybutylenterephthalat-Gemischen besteht.

12. Zusammensetzung nach Anspruch 2, wobei das Melaminpyrophosphat in einem Anteil von 25 bis 45 Gew.-% vorhanden ist.

13. Zusammensetzung nach Anspruch 1 oder Anspruch 2, wobei das Verstärkungsmittel aus Glas, Kohlenstoff, Glimmer, Aramidfasem oder Gemischen daraus besteht.

14. Zusammensetzung nach Anspruch 1 oder Anspruch 2, die ferner (4) eine Silanverbindung aufweist.

15. Zusammensetzung nach Anspruch 14, wobei die Silanverbindung in einem Anteil bis zu 0,4 Gew.-% vorhanden ist, bezogen nur auf das Gesamtgewicht von (1) + (2) + (3) + (4).

16. Zusammensetzung nach einem der Ansprüche 1 bis 15, die eine UL-94-Bewertung von V0 bei 0,16 cm Dicke aufweist.

17. Formartikel, hergestellt aus der Zusammensetzung nach einem der Ansprüche 1 bis 16.

## Revendications

1. Composition comprenant:
(1) 30 à 70% en poids d'un polyester qui est un produit de condensation d'un acide dicarboxylique aromatique ayant de 8 à 14 atomes de carbone et d'au moins un glycol choisi dans le groupe constitué par le néopentylglycol, le cyclohexane diméthanol et les glycols aliphatiques de formule HO(CH₂)ₙOH où n est un entier de 2 à 10, et dans lequel jusqu'à 50% en moles de l'acide dicarboxylique aromatique peuvent être remplacés par au moins un acide dicarboxylique aromatique différent ayant de 8 à 14 atomes de carbone, et/ou jusqu'à 20% en moles de l'acide dicarboxylique aromatique peuvent être remplacés par un acide dicarboxylique aliphatique ayant de 2 à 12 atomes de carbone;
(2) 15 à 40% en poids d'un agent renforçant; et
(3) un retardateur de flamme choisi dans le groupe constitué par
(a) 20 à 30% en poids de phosphate de mélamine et jusqu'à 10% en poids d'un catalyseur de carbonisation;
(b) 15 à 30% en poids de phosphate de mélamine, jusqu'à 10% en poids d'un catalyseur de carbonisation et jusqu'à 10% en poids d'un agent de formation de charbon;
(c) 15 à 30% en poids de pyrophosphate de mélamine et jusqu'à 10% en poids d'un catalyseur de carbonisation;
(d) 15 à 30% en poids de pyrophosphate de mélamine, jusqu'à 10% en poids d'un catalyseur de carbonisation et jusqu'à 10% en poids d'un agent de formation de charbon; et
(e) 20 à 30% en poids de pyrophosphate de mélamine et jusqu'à 10% en poids d'au moins l'un parmi le cyanurate de mélamine, la mélamine ou le borate de zinc;
dans laquelle tous les pourcentages en poids sont sur la base du poids total de (1)+(2)+(3) seulement.

2. Composition comprenant:
(1) 30 à 70% en poids d'un polyester qui est un produit de condensation d'un acide dicarboxylique aromatique ayant de 8 à 14 atomes de carbone et d'au moins un glycol choisi dans le groupe constitué par le néopentylglycol, le cyclohexane diméthamol et les glycols aliphatiques de formule HO(CH₂)ₙOH où n est un entier de 2 à 10, et dans lequel jusqu'à 50% en moles de l'acide dicarboxylique aromatique peuvent être remplacés par au moins un acide dicarboxylique aromatique différent ayant de 8 à 14 atomes de carbone, et/ou jusqu'à 20% en moles de l'acide dicarboxylique aromatique peuvent être remplacés par un acide dicarboxylique aliphatique ayant de 2 à 12 atomes de carbone;
(2) 15 à 40% en poids d'un agent renforçant; et
(3) un retardateur de flamme ayant de 5 à 45% en poids de pyrophosphate de mélamine;
dans laquelle tous les pourcentages en poids sont sur la base du poids total de (1)+(2)+(3) seulement.

3. Composition selon la revendication 1, dans laquelle le catalyseur de carbonisation est l'acide phosphotungstique ou l'acide silicotungstique.

4. Composition selon la revendication 1, dans laquelle le catalyseur de carbonisation est un sel de métal alcalin de l'acide tungstique.

5. Composition selon la revendication 1, dans laquelle la quantité du catalyseur de carbonisation est de 0,1 à 10% en poids.

6. Composition selon la revendication 1, dans laquelle la quantité du catalyseur de carbonisation est de 0,1 à 2% en poids.

7. Composition selon la revendication 1, dans laquelle l'agent de formation de charbon est un alcool polyhydrique.

8. Composition selon la revendication 7, dans laquelle l'alcool polyhydrique est le pentaérythritol.

9. Composition selon la revendication 1, dans laquelle la quantité de l'agent de formation de charbon est de 0,1 à 10% en poids.

10. Composition selon la revendication 1, dans laquelle la quantité de l'agent de formation de charbon est de 0,1 à 2% en poids.

11. Composition selon la revendication 1 ou la revendication 2, dans laquelle ledit polyester est un polytéréphtalate d'éthylène, un polytéréphtalate de butylène, des copolymères polytéréphtalate d'éthylène/polytéréphtalate de butylène ou des mélanges polytéréphtalate d'éthylène/polytéréphtalate de butylène.

12. Composition selon la revendication 2, dans laquelle le pyrophosphate de mélamine est présent en une quantité de 25 à 45% en poids.

13. Composition selon la revendication 1 ou la revendication 2, dans laquelle ledit agent renforçant est le verre, le carbone, le mica, les fibres d'aramide ou des mélanges de ceux-ci.

14. Composition selon la revendication 1 ou la revendication 2, comprenant en outre (4) un composé silane.

15. Composition selon la revendication 14, dans laquelle le composé silane est présent en une quantité allant jusqu'à 0,4% en poids, sur la base du poids total de (1)+(2)+(3)+(4) seulement.

16. Composition selon l'une quelconque des revendications 1 à 15, qui a une valeur UL-94 de V0 à 0,16 cm d'épaisseur.

17. Article moulé fabriqué à partir de la composition selon l'une quelconque des revendications 1 à 16.
